# EUROPÄISCHE PATENTSCHRIFT

(11) **EP 0 353 554 B1**
(45) Veröffentlichungstag und Bekanntmachung des Hinweises auf die Patenterteilung: **17.03.1993**
(21) Anmeldenummer: 89113390.2
(22) Anmeldetag: 21.07.1989
(51) Int. Cl.: B29C 47/96, B29C 47/08, C06B 21/00

(54) **Vorrichtung zum Extrudieren plastischer Massen**
Apparatus for extruding plastics masses
Dispositif d'extrusion de masses plastiques

(30) Priorität: 05.08.1988 DE 3826641
(43) Veröffentlichungstag der Anmeldung: 07.02.1990
(73) Patentinhaber: FRAUNHOFER-GESELLSCHAFT ZUR FÖRDERUNG DER ANGEWANDTEN FORSCHUNG E.V., 80636 München (DE)
(72) Erfinder: Müller, Dietmar, Dr. Dipl.-Chem., D-7500 Karlsruhe 41 (DE); Bauer, Helmut, D-8336 Malgersdorf (DE); Franken, Harald, D-7500 Karlsruhe 21 (DE); Seiter, Harry, D-7507 Pfinztal (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 172 548
- CH-A- 593 786
- DE-A- 3 508 547

## Beschreibung

Die Erfindung betrifft eine Vorrichtung zum Extrudieren plastischer Massen, insbesondere plastischer Treib- und Explosivstoffe, mit einem Gehäuse, wenigstens einem darin bewegten Preßorgan, z. B. einer umlaufenden Extruderschnecke, und einer das Gehäuse ausgangsseitig abschließenden, formgebenden Matrizenplatte, die auf das Gehäuse aufgespannt und bei Auftreten eines zu hohen Überdrucks im Gehäuse von diesem abhebbar ist.

Vorrichtungen der vorgenannten Art, die als Schneckenextruder, Strangpressen, Kolbenpressen od. dgl. ausgebildet sein können, werden vor allem in der Kunststoffverarbeitung zum Extrudieren plastischer Kunststoffmassen eingesetzt. Sie finden aber auch Verwendung zum Extrudieren anderer homogener und inhomogener plastischer Massen, beispielsweise bei der Erzeugung von Treibstoff- oder Pulversträngen. Im letztgenannten Fall müssen die Druck- und Temperaturverhältnisse innerhalb des Extruders, vor allem auch am Extruderkopf und an der Matrizenplatte sehr genau gesteuert werden, und zwar auch in Abhängigkeit von den Bestandteilen der zu verarbeitenden Masse, um zu vermeiden, daß die Masse verpufft oder deflagriert. Trotz peinlicher Beachtung der Betriebsparameter lassen sich solche Unregelmäßigkeiten nicht völlig ausschließen. Da die Masse unter dem Förder- und Formungsdruck steht und in dem Gehäuse vollständig eingeschlossen ist, werden bei der Verpuffung bzw. Deflagration große Energien entwickelt, die zur Zerstörung von Maschinenteilen oder der ganzen Maschine, möglicherweise auch im Umfeld der Maschine führen können.

Für diesen besonderen Anwendungszweck ist deshalb bereits vorgeschlagen worden, die Matrizenplatte mittels hydraulischer Spannzangen auf das Gehäuse aufzuspannen, um bei Auftreten eines zu hohen Überdrucks im Gehäuse ein Abheben der Matrizenplatte zu ermöglichen. Diese konstruktive Maßnahme hat jedoch nur dann die erwünschte Wirkung, wenn der Druckaufbau nicht zu schnell erfolgt. Hinzu kommt, daß der Hub der Spannzangen relativ gering ist, so daß der Austrittsquerschnitt bei Abheben der Matrizenplatte keinen schlagartigen Abbau des Überdrucks ermöglicht.

Das Problem eines zu hohen Druckaufbaus in dem Gehäuse besteht aber auch beim Extrudieren anderer Massen, wobei die Ursachen vielfältiger Natur sein können, z. B. Verstopfung der Matrizenplatte bei kleinen Formungsquerschnitten, Änderung der Massezusammensetzung und/oder der Plastizität der Masse.

Es ist bei Extrudern für druck- oder temperaturempfindliche Produkte bekannt (DE-C-34 31 274), eine Matrizenplatte mit einer linearen Düsenreihe vorzusehen und diese Matrizenplatte zweiteilig mit einer in der Düsenreihe liegenden Trennebene auszubilden. Eine der beiden Teile der Matrizenplatte ist fest, das andere gelenkig mit dem Extrudergehäuse verbunden und dadurch verschwenkbar. Die verschwenkbare Platte kann mittels eines Pneumatikzylinders aus der Schließ- in die Öffnungslage gebracht werden. Um das Abheben druck- oder temperaturabhängig zu ermöglichen, ist im Extruder ein Meßgerät angeordnet, das den Druck oder die Temperatur oder eine hierfür maßgebliche andere Meßgröße aufnimmt und über eine Steuerung den Pneumatikzylinder ansteuert. Diese Ausführung ist für schnelle Druckanstiege viel zu träge. Sie kann auch nicht als automatisch arbeitende Überdrucksicherung angesehen werden, da es sich um eine meßtechnische Steuerung handelt. Sie ist daher insbesondere für Explosivstoffe nicht geeignet. Auch fährt der Pneumatikzylinder nach dem Öffnen wieder zu, ohne daß die möglicherweise noch vorhandene Gefährdung behoben ist.

Der Erfindung liegt die Aufgabe zugrunde, die eingangs genannte Vorrichtung dahingehend weiterzuentwickeln, daß bei Auftreten eines unerwünschten Überdrucks im Gehäuse eine wirksame und schlagartige Entlastung möglich ist und ferner die Matrizenplatte auch bei Bedarf willkürlich abgehoben werden kann, um sie beispielsweise gegen eine andere Matrizenplatte für eine andere Formungsaufgabe leicht austauschen zu können.

Diese Aufgabe wird erfindungsgemäß dadurch gelöst, daß die Matrizenplatte mittels einer mechanischen oder einer Gasdruck-Feder, deren Federkraft einstellbar ist, auf das Gehäuse auf gespannt und mittels eines der Feder entgegengerichteten Hydraulikdrucks willkürlich vom Gehäuse abhebbar ist.

Mit der erfindungsgemäßen Ausbildung wird eine wirksame Überdrucksicherung geschaffen, da eine mechanische oder pneumatische Feder mit hoher Geschwindigkeit komprimierbar ist und dabei keine bzw. keine nennenswerten Strömungswiderstände zu überwinden sind. Auch läßt sich eine solche Feder mit einem ausreichend großen Federweg ausstatten, um schnell einen großen Austrittsquerschnitt freizugeben. Schließlich läßt sich die Federkraft sehr genau einstellen, da sie nicht von anderen Faktoren, wie Leitungswiderständen oder dergleichen nennenswert beeinflußt wird. Weiterhin ist es möglich, die Matrizenplatte gegen den Aufspanndruck willkürlich abzuheben, wobei es nicht notwendig ist, den Aufspanndruck abzubauen. Es reicht aus, wenn der Hydraulikkreislauf auf einen Druck einregelbar ist, der ausreichend hoch über dem Aufspanndruck der mechanischen oder der Gasdruck-Feder liegt.

Vorzugsweise ist die Matrizenplatte mittels wenigstens zwei diametral gegenüberliegender, seitlich am Gehäuse angeordneter Druckmittelzylinder aufgespannt, dessen doppeltwirkender Kolben über die Kolbenstange mit der Matrizenplatte verbunden und kolbenstangenseitig von der Feder, auf der anderen Seite hydraulisch beaufschlagt ist.

Die Überdrucksicherung und die Öffnungsmechanik sind also innerhalb eines einzigen Bauteils, nämlich eines Druckmittelzylinders verwirklicht, wobei sämtliche Stellbewegungen beim Aufspannen und beim sicherheitstechnischen, wie auch beim willkürlichen Abheben der Matrizenplatte allein durch einen Kolben durchgeführt werden. Der Federdruck kann - je nach notwendigem Sicherheitsfaktor - im Bereich von etwa 75 % des maximalen Hydraulikdrucks betragen, so daß stets gewährleistet ist, daß ein willkürliches Abheben unter Betriebsbedingungen möglich ist.

Ist die Feder als Gasdruck-Feder ausgebildet, so ist mit Vorteil der kolbenstangenseitige Raum der Druckmittelzylinder mit einem Steuerzylinder verbunden, dessen Kolben an der der Gasdruckseite gegenüberliegenden Seite mit hydraulischem Steuerdruck beaufschlagt ist.

Auf diese Weise läßt sich der von der Gasdruck-Feder erzeugte Aufspanndruck sehr genau einregulieren und in einfacher Weise verändern. Eine solche Änderung ist insbesondere auch während des Betriebs möglich.

Eine weitere Ausführungsform der Erfindung zeichnet sich dadurch aus, daß die Druckmittelzylinder an ihrem der Matrizenplatte gegenüberliegenden Ende gegenüber dem Gehäuse um eine Querachse schwenkbar sind, und daß die Matrizenplatte mit den Kolbenstangen lösbar verbunden ist.

Mit der vorgenannten Ausbildung ist es möglich, nach Abheben der Matrizenplatte mittels des Hydraulikdrucks die Matrizenplatte zusammen mit den Druckmittelzylindern nach oben zu schwenken und beispielsweise gegen eine andere Matrizenplatte zur Formung anderer Querschnitte auszutauschen. Die Matrizenplatte sitzt also nicht mehr an dem Gehäuse, wo sie üblicherweise mit Schraubankern oder dergleichen befestigt ist, sondern an den Kolbenstangen, von denen sie sich in der ausgeschwenkten Lage problemlos und in ergonomisch günstiger Höhe lösen läßt.

Zweckmäßigerweise ist außenseitig am Gehäuse diametral gegenüberliegend je ein Lagerbock angeordnet, an dem wenigstens je ein Druckmittelzylinder schwenkbar gelagert ist. Diese Lagerböcke können problemlos auch nachträglich an vorhandenen Maschinen angebaut werden.

Wenngleich zwei Druckmittelzylinder in diametraler Anordnung ausreichen, ist es von Vorteil, insbesondere bei Doppelwellen-Schneckenextrudern, auf gegenüberliegenden Seiten des Gehäuses je zwei Druckmittelzylinder anzuordnen und an ihren der Matrizenplatte gegenüberliegenden Enden über eine Traverse zu verbinden, die ihrerseits am Lagerbock schwenkbar ist. Traverse, Matrizenplatte und die dazwischen angeordneten Druckmittelzylinder bilden eine Art Rahmen, der die auftretenden Drucke problemlos aufnimmt und in die Lagerböcke einleitet. Die Lagerböcke selbst können beispielsweise an den üblicherweise vorhandenen Außenringen an jedem Gehäuseschuß des Extruders abgestützt sein, so daß die Kräfte weitgehend axial in das Gehäuse eingeleitet werden.

Nachstehend ist die Erfindung an Hand eines in der Zeichnung wiedergegebenen Ausführungsbeispiels beschrieben. In der Zeichnung zeigen:
Figur 1 Eine Draufsicht einer Ausführungsform der Vorrichtung in Form eines Extruders und
Figur 2 eine Seitenansicht zu der Darstellung gemäß Figur 1.

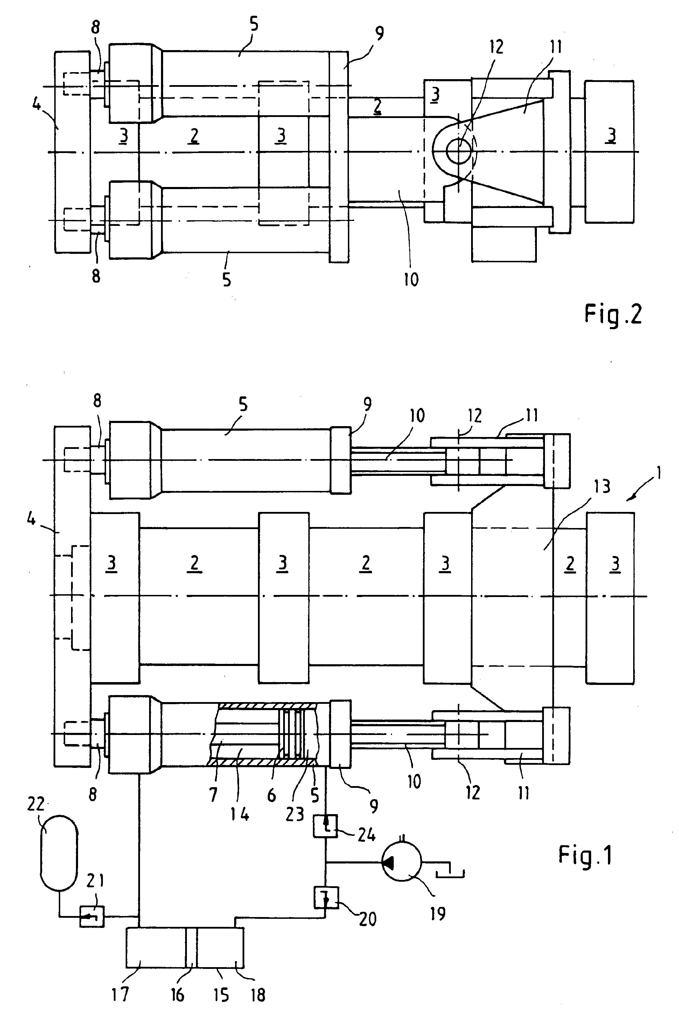

Die in den Figuren 1 und 2 nur in einem Längsabschnitt gezeigte Vorrichtung zum Extrudieren plastischer Massen, insbesondere plastischer Treib- oder Explosivstoffe, weist ein Gehäuse 1 auf, das aus mehreren, vornehmlich zylindrischen Schüssen 2 und dazwischen eingesetzten Gehäuseringen 3 besteht, auf. In dem Gehäuse - nicht gezeigt - laufen ein oder zwei Extruderschnecken um, die die Masse plastifizieren und homogenisieren und in Richtung zu einer Matrizenplatte 4 fördern. Die Matrizenplatte kann ein oder mehr Austrittsöffnungen aufweisen, die gegebenenfalls auch profiliert sind, um die plastische Masse in einen oder mehreren Strängen auszupressen.

Die Matrizenplatte 4 ist mit Hilfe von Druckmittelzylindern 5 auf das Ende des Gehäuses 1 der Vorrichtung aufgespannt. Beim gezeigten Ausführungsbeispiel sind zu beiden Seiten des Gehäuses 1 jeweils zwei Druckmittelzylinder übereinander angeordnet.

In den Druckmittelzylindern 5 laufen Kolben 6 (siehe Figur 1, unten), deren Kolbenstangen 7 sich zur Matrizenplatte 4 hin erstrecken. An den freien Enden 8 der Kolbenstangen 7 ist die Matrizenplatte 4 lösbar befestigt.

Die Zylinder 5 sind an ihrem der Matrizenplatte 4 abgekehrten Ende jeweils paarweise über eine Traverse 9 verbunden, die über eine nach hinten reichende Verlängerung 10 an einem Zapfen 12 eines Lagerbocks 11 schwenkbar gelagert sind. Beide Lagerböcke 11 sind wiederum über ein quer verlaufendes Joch 13 mit einander verbunden und auf einem Gehäuseschuß 2 mit einem Gehäusering 3 als Widerlager lösbar befestigt.

Der Druckmittelzylinder 5 ist in seinem von der Kolbenstange 7 durchsetzten vorderen Raum 14 mit einem vorgespannten Gas, z.B. Stickstoff, beaufschlagt, das eine Gasdruck-Feder bildet, die die Matrizenplatte 4 gegen das Gehäuse 1 der Vorrichtung elastisch aufspannt. Der Gasdruck ist über einen Steuerzylinder 15 mit einem frei laufenden Kolben 16 regulierbar. Der Raum 17 des Steuerzylinders 15 steht zu diesem Zweck mit dem Raum 14 des Druckmittelzylinders 5 in Verbindung, während der dem Kolben 16 gegenüberliegende Raum 18 des Steuerzylinders 15 an eine Hydraulikpumpe 19 mit zwischengeschaltetem Regelventil 20 angeschlossen ist. Durch Einregeln des Ventils 20 und damit des Hydraulikdrucks im Raum 18 läßt sich der Druck im Raum 17 und damit die Kraft der Gasdruck-Feder einstellen. Sie wird so einreguliert, daß sie um ein gewisses Maß oberhalb des Betriebsdrucks des Extruders liegt. Steigt der Druck im Extruder über diesen Sicherheitswert, so wird das Gas im Raum 14 der Druckmittelzylinder 5 unter Ausfahren der Kolbenstangen komprimiert, so daß die Matrizenplatte 4 von dem Gehäuse 1 abhebt und der Innendruck im Gehäuse 1 nach außen entlastet wird. In dem Luftkreislauf ist ferner ein Abblasventil 21 angeordnet, das gegebenenfalls in einen Speicher 22 niedrigeren Drucks entlastet.

Der dem Raum 14 jenseits des Kolbens 6 gegenüberliegende Raum 23 der Druckmittelzylinder 5 ist wiederum mit Hydraulikflüssigkeit beaufschlagt und zu diesem Zweck an die Hydraulikpumpe 19 über ein Druckregelventil 24 angeschlossen. Durch Druckerhöhung im Hydraulikraum 23 kann der Kolben 6 in Richtung zur Matrizenplatte 4 verschoben und diese vom Gehäuse 1 abgehoben werden. Dies kann nach Druckabsenkung im Pneumatikkreislauf oder aber auch durch entsprechend hohen Hydraulikdruck unter dem Betriebsdruck im Zylinderraum 14 erfolgen. Auf diese Weise läßt sich die Matrizenplatte 4 willkürlich abheben, um sie beispielsweise gegen eine andere Matrizenplatte auszutauschen. Um dies in besonders einfacher Weise zu ermöglichen und gegebenenfalls auch den Innenraum des Gehäuses zu inspizieren oder gar dieses umzubauen, können die Druckmittelzylinder 5 mit der Matrizenplatte 4 um den Zapfen 12 nach oben geschwenkt werden, so daß das Gehäuse am Extruderkopf vollständig frei kommt und auch die Matrizenplatte 4 gut zugänglich ist.

## Patentansprüche

1. Vorrichtung zum Extrudieren plastischer Massen, insbesondere plastischer Treib- oder Explosivstoffe, mit einem Gehäuse, wenigstens einem darin bewegten Preßorgan, z. B. einer umlaufenden Extruderschnecke, und einer das Gehäuse ausgangsseitig abschließenden, formgebenden Matrizenplatte, die auf das Gehäuse aufgespannt und bei Auftreten eines zu hohen Überdrucks im Gehäuse von diesem abhebbar ist, dadurch gekennzeichnet, daß die Matrizenplatte (4) mittels einer mechanischen oder einer Gasdruck-Feder (14), deren Federkraft einstellbar ist, auf das Gehäuse (1) aufgespannt und mittels eines der Feder (14) entgegengerichteten Hydraulikdrucks (23) willkürlich vom Gehäuse abhebbar ist.

2. Vorrichtung nach Anspruch 1, dadurch gekennzeichnet, daß die Matrizenplatte (4) mittels wenigstens zwei diametral gegenüberliegender, seitlich am Gehäuse (1) angeordneter Druckmittelzylinder (5) aufgespannt ist, dessen doppeltwirkender Kolben (6) über die Kolbenstange (7) mit der Matrizenplatte (4) verbunden und kolbenstangenseitig (14) von der Feder, auf der anderen Seite (3) hydraulisch beaufschlagt ist.

3. Vorrichtung nach Anspruch 1 oder 2, dadurch gekennzeichnet, daß bei Ausbildung der Feder als Gasdruckfeder der kolbenstangenseitige Raum (14) des Druckmittelzylinders (5) mit einem Steuerzylinder (15) verbunden ist, dessen Kolben (16) an der der Gasdruckseite (14) gegenüberliegenden Seite (23) mit hydraulischem Steuerdruck beaufschlagt ist.

4. Vorrichtung nach einem der Ansprüche 1 bis 3, dadurch gekennzeichnet, daß die Druckmittelzylinder (5) an ihrem der Matrizenplatte (4) gegenüberliegenden Ende gegenüber dem Gehäuse (1) um eine Querachse (12) schwenkbar sind, und daß die Matrizenplatte (4) mit den Kolbenstangen (7) lösbar verbunden ist.

5. Vorrichtung nach einem der Ansprüche 1 bis 4, dadurch gekennzeichnet, daß außenseitig am Gehäuse (1) diametral gegenüberliegend je ein Lagerbock (11) angeordnet ist, an dem wenigstens je ein Druckmittelzylinder (5) schwenkbar gelagert ist.

6. Vorrichtung nach einem der Ansprüche 1 bis 5, dadurch gekennzeichnet, daß auf gegenüberliegenden Seiten des Gehäuses (1) je zwei Druckmittelzylinder (5) angeordnet und an ihren der Matrizenplatte (4) gegenüberliegenden Enden über eine Traverse (9) verbunden sind, die ihrerseits am Lagerbock (11) schwenkbar ist.

## Claims

1. Apparatus for extruding plastic masses, particularly plastic propellants or explosives, with a casing, at least one pressing member moved therein, e.g. a rotating extruder screw and a shaping retainer plate terminating the casing at the outlet side, which is fixed to the casing and which can be raised from the casing if an excessive overpressure occurs therein, characterized in that the retainer plate (4) is fixed to the casing (1) by means of a mechanical or a gas pressure spring (14), whose spring tension is adjustable and can be raised in random manner from the casing by means of a hydraulic pressure (23) directed opposite to the spring (14).

2. Apparatus according to claim 1, characterized in that the retainer plate (4) is fixed by means of at least two diametrically facing pressure medium cylinders (5) located laterally on the casing (1) and whose double-acting piston (6) is connected by means of the piston rod (7) to the retainer plate (4) and on the piston rod side (14) is subject to the action of the spring and to hydraulic action on the other side (3).

3. Apparatus according to claims 1 or 2, characterized in that on constructing the spring as a gas pressure spring the piston rod-side zone (14) of the pressure medium cylinder (5) is connected to a control cylinder (15), whose piston (16) is exposed to the action of a hydraulic control pressure on the side (23) opposite to the gas pressure side (14).

4. Apparatus according to one of the claims 1 to 3, characterized in that the pressure medium cylinders (5) at the end thereof opposite to the retainer plate (4) with respect to the casing (1) are pivotable about a transverse axis (12) and that the retainer plate (4) is detachably connected to the piston rod (7).

5. Apparatus according to one of the claims 1 to 4, characterized in that externally on the casing (1) is provided in diametrically facing manner in each case one bearing block (11) on which is pivotably mounted at least one pressure medium cylinder (5).

6. Apparatus according to one of the claims 1 to 5, characterized in that on opposite sides of the casing (1) are in each case provided two pressure medium cylinders (5) and at their ends opposite to the retainer plate (4) are connected by means of a cross-member (9), which is in turn pivotable on the bearing block (11).

## Revendications

1. Dispositif d'extrusion de masses plastiques, en particulier de combustibles ou d'explosifs, comprenant un carter, au moins un organe de compression déplacé à l'intérieur de ce dernier, par exemple une vis d'extrudeuse tournante, et une plaque de matrice de moulage qui ferme le carter du côté sortie, est montée sur ledit carter et peut être retirée de celui-ci lors de l'apparition d'une suppression trop importante, **caractérisé en ce** que la plaque de matrice (4) est montée sur le carter (1) au moyen d'un ressort mécanique ou sous pression de gaz (14) dont l'effet de ressort est réglable et qu'elle peut être dégagée arbitrairement dudit carter au moyen d'une pression hydraulique (23) agissant dans le sens opposé au ressort (14).

2. Dispositif selon la revendication 1, caractérisé en ce que la plaque de matrice (4) est fixée au moyen d'au moins deux vérins pneumatiques ou hydrauliques (5) diamétralement opposés et montés latéralement sur le carter (1), dont le piston (6) à double effet est couplé par l'intermédiaire de la tige de piston (7) avec la plaque de matrice (4) et sollicité du côté de la tige de piston (14) par le ressort et de l'autre côté (3) par un fluide hydraulique.

3. Dispositif selon l'une des revendications 1 ou 2, caractérisé en ce que, si le ressort est conformé en ressort sous pression de gaz, le volume (14) du vérin pneumatique ou hydraulique (5) situé du côté de la tige de piston communique avec un maître-cylindre (15) dont le piston (16) est sollicité du côté (23) opposé à la pression du gaz (14), par une pression hydraulique de commande.

4. Dispositif selon l'une des revendications 1 à 3, caractérisé en ce que l'extrémité des vérins pneumatiques ou hydrauliques (5) opposée à la plaque de matrice (4) peut pivoter par rapport au carter (1) autour d'un axe transversal (12), et que la plaque de matrice (4) est couplée de manière amovible avec les tiges de piston (7).

5. Dispositif selon l'une des revendications 1 à 4, caractérisé en ce qu'à l'extérieur du carter (1) sont respectivement disposés diamétralement en face l'un de l'autre des supports (11) sur lesquels est respectivement articulé au moins un vérin pneumatique ou hydraulique (5).

6. Dispositif selon l'une des revendications 1 à 5, caractérisé en ce que sur des côtés opposés du carter (1) sont prévus respectivement deux vérins pneumatiques ou hydrauliques (5) qui sont reliés à leurs extrémités opposées à la plaque de matrice (4) par l'intermédiaire d'une traverse (9) laquelle peut à son tour pivoter sur le support (11).
